# EUROPÄISCHE PATENTSCHRIFT

(11) **EP 3 386 334 B1**
(45) Veröffentlichungstag und Bekanntmachung des Hinweises auf die Patenterteilung: **17.07.2019**
(21) Anmeldenummer: 15808105.9
(22) Anmeldetag: 07.12.2015
(51) Int. Cl.: A43B 13/04, A43B 13/12, A43B 13/18, B29D 35/12

(54) **SCHUH, INSBESONDERE SPORTSCHUH**
SHOE, IN PARTICULAR SPORTS SHOE
CHAUSSURE, NOTAMMENT CHAUSSURE DE SPORT

(43) Veröffentlichungstag der Anmeldung: 17.10.2018
(73) Patentinhaber: PUMA SE, 91074 Herzogenaurach (DE)
(72) Erfinder: HARTMANN, Matthias, 91301 Forchheim (DE); GIRARD, Romain, 91207 Lauf an der Pegnitz (DE)
(74) Vertreter: Gosdin, Michael
(86) Internationale Anmeldenummer: PCT/EP2015/002456
(87) Internationale Veröffentlichungsnummer: WO 2017/097315

(56) Entgegenhaltungen:
- EP-A2- 2 649 896
- WO-A1-01/01806
- WO-A1-99/29203
- WO-A1-2007/024523
- WO-A2-2006/066256
- DE-A1-102011 108 744
- US-A1- 2009 013 558
- US-A1- 2013 145 653

## Beschreibung

Die Erfindung betrifft einen Schuh, insbesondere einen Sportschuh, wie er im unabhängigen Anspruch 1 angegeben ist. Bevorzugte Ausführungsformen der Erfindung sind in den abhängigen Ansprüchen offenbart.

Ein Schuh der gattungsgemäßen Art ist aus der WO 2006/066256 A2 bekannt. Eine ähnliche Lösung zeigt die WO 99/29203 A1 und die US 2013/0145653 A1**.**

Ein anderer Schuh ist aus der US 2009/0013558 A1 bekannt. Die hier vorgesehene Schuhsohle besteht aus unterschiedlichen Kunststoffen, die miteinander verbunden sind, wobei unterschiedliche Polymermaterialien zum Einsatz kommen. Weitere Lösungen offenbaren die EP 2 649 896 A2**,** die WO 2007/024523 A1 und die WO 01/01806 A1.

In der WO 2007/082838 A1 wird beschrieben, dass für eine Schuhsohle auch expandiertes Thermoplastisches Polyurethan (E-TPU) vorteilhaft zum Einsatz kommen kann. In diesem Dokument sind auch detaillierte Informationen zu diesem Kunststoffmaterial vorhanden; insoweit wird ausdrücklich auf dieses Dokument Bezug genommen.

Einen ähnlichen Schuh offenbart auch die DE 10 2011 108 744 B4**,** in der in gleicher Weise E-TPU als Material für die Sohle herangezogen wird. Hier ist beschrieben, dass einzelne geschäumte Kunststoffkugeln aus diesem Material, die zumeist eine Abmessung von wenigen Millimetern haben, dadurch zur Sohle geformt werden, dass gemäß einer möglichen Verarbeitungsform in ein entsprechendes Werkzeug ein Bindemittel eingegeben wird, so dass die Kunststoffkugeln miteinander verbunden werden und den Formkörper der Sohle bilden. Nach einer anderen Vorgehensweise wird Wasserdampf unter definiertem Druck in ein Formwerkzeug eingegeben, in dem die Kunststoffkugeln eingebracht sind. Dabei kommt es zu einem partiellen Aufschmelzen des Kunststoffmaterials, so dass sich die Kunststoffkugeln stoffschlüssig miteinander verbinden und so den Formkörper der Sohle bilden.

Die damit erzielbaren Eigenschaften des Schuhs, insbesondere mit Blick auf dessen Dämpfungsverhalten, sind nicht in jedem Falle voll befriedigend. Des weiteren ist der Herstellungsprozess der genannten Sohle mitunter relativ aufwendig und somit kostenintensiv.

Der Erfindung liegt daher die **Aufgabe** zugrunde, einen Schuh der eingangs genannten Art so fortzubilden, dass in effektiver Weise sein Dämpfungsverhalten in gewünschter Weise eingestellt werden kann, wobei dies in einer einfachen Weise erfolgen soll, so dass die Produktionskosten des Schuhs möglichst gering bleiben. Die Dämpfeigenschaften des Schuhs sollen also bei einer einfachen Herstellungsmöglichkeit verbessert werden können.

Die **Lösung** dieser Aufgabe durch die Erfindung ist dadurch gekennzeichnet, dass die Kunststoffkörper als Kugeln oder Ellipsoide ausgebildet sind, deren Abmessungen in den drei Raumrichtungen zwischen 1 mm und 13 mm betragen, wobei die Kunststoffkörper aus expandiertem thermoplastischen Polyurethan (E-TPU), aus expandiertem thermoplastischen Elastomer (E-TPE) und/oder aus expandiertem Polypropylen (EPP) bestehen.

Die Abmessungen der einzelnen Kunststoffkörper in den drei Raumrichtungen betragen bevorzugt zwischen 3 mm und 9 mm.

Die Kunststoffkörper füllen den mindestens einen Hohlraum bevorzugt zumindest weitgehend, besonders bevorzugt vollständig, aus.

Das Verschlusselement kann durch eine Folie oder ein flächiges Textilmaterial gebildet werden, die oder das mit einem Teil der Sohle verbunden, vorzugsweise verklebt, ist.

Vorgesehen werden kann aber auch, dass das Verschlusselement durch eine Einlegesohle gebildet wird, wobei die Einlegesohle vorzugsweise mit einem Teil der Sohle verbunden, vorzugsweise verklebt, ist.

Die Kunststoffkörper bestehen bevorzugt aus geschäumtem Kunststoffmaterial.

Die den mindestens einen Hohlraum aufweisende Sohle besteht bevorzugt aus thermoplastischem Polyurethan (TPU), aus thermoplastischem Elastomer (TPE), aus Polyamid (PA) und/oder aus Gummimaterial.

Die Sohle kann auch mehrere Hohlräume aufweisen.

Gemäß einer speziellen Ausgestaltung der Erfindung ist vorgesehen, dass ein erster Hohlraum mit Kunststoffkörpern gefüllt ist, die eine erste Eigenschaft aufweisen, und dass ein zweiter Hohlraum mit Kunststoffkörpern gefüllt ist, die eine zweite Eigenschaft aufweisen, die von der ersten Eigenschaft unterschiedlich ist. Die Eigenschaft, die unterschiedlich gewählt sein kann, betrifft dabei bevorzugt das Material der Kunststoffkörper, die Größe der Kunststoffkörper und/oder die Härte der Kunststoffkörper.

Die Sohle kann eine Zwischensohle umfassen, die den mindestens einen Hohlraum aufweist und die mit einer Außensohle verbunden ist.

Es ist dabei möglich, dass die Sohle oder zumindest ein Teil derselben durch einen Spritzgießvorgang hergestellt ist, bei dem der mindestens eine Hohlraum ausgebildet worden ist.

Die Kunststoffkörper sind bevorzugt in voller Packung unter einem gewissen Druck in dem mindestens einen Hohlraum angeordnet. Damit wird eine zumindest weitgehend vollständige Füllung des Hohlraums sichergestellt.

Die Kunststoffkörper weisen bevorzugt eine Härte zwischen 75 bis 90 Shore A auf, vorzugsweise zwischen 80 und 85 Shore A.

Die Kunststoffkörper haben bevorzugt eine Schüttdichte zwischen 100 und 300 kg/m³.

Zu dem zum Einsatz kommenden expandierten thermoplastischen Polyurethan (E-TPU) sei folgendes erwähnt: Dieses Material ist, wie bereits oben angegeben, an sich bekannt und wird beispielsweise in Schuhen eingesetzt. Es ist beispielsweise unter der Bezeichnung "PearlFoam" von der Huntsman International LLC oder unter der Bezeichnung "Infinergy" von der BASF SE erhältlich. Zu diesem Material wird ausdrücklich auf die WO 2005/066250 A1 Bezug genommen, wo sich Details zu diesem Material, also zu expandierbaren thermoplastischen Polyurethanen und deren Herstellung finden.

Zum Vorbekanntsein von thermoplastischem Elastomer auf Urethanbasis sei weiterhin ausdrücklich auf die WO 2010/010010 A1 hingewiesen, in der ein expandierbarer, treibmittelhaltiger thermoplastischer Polymer-Blend offenbart wird, der thermoplastisches Polyurethan und Styrolpolymerisat enthält. Der Polymer-Blend kann dabei mindestens ein weiteres thermoplastisches Polymer enthalten. Als weiteres thermoplastisches Polymer kommt insbesondere Polyamid (PA), Polymethylmethacrylat (PMMA), Polycarbonat (PC), Polyethylen (PE), Polypropylen (PP), Polyvinylchlorid (PVC), Cellulose bzw. Polyoxymethylen (POM) in Frage.

Gemäß der Erfindung werden also expandierte Kunststoffschaum-Kugeln oder -Ellipsoide unter Verwendung insbesondere von E-TPU, E-TPE oder EPP (um beispielsweise sehr leichte Zwischensohlen zu fertigen) eingesetzt, die in den geschaffenen Hohlraum im Sohlengrundkörper gefüllt werden (besagter Sohlengrundkörper kann auch als vorgefertigter "Käfig" für die Kugeln bzw. Ellipsoide bezeichnet werden).

Der Sohlengrundkörper kann im Spritzgießverfahren oder per Blasformen (das Ausgangsmaterial ist hierbei bevorzugt TPU, PA oder TPE) aber auch mittels eines Vulkanisationsprozesses (im Falle von Gummi) hergestellt werden und enthält zumindest einen Hohlraum (Aussparung), der mit den genannten Kugeln bzw. Ellipsoiden aus expandiertem Kunststoff befüllt wird; besagte Befüllung kann drucklos oder auch unter einem gewissen Druck erfolgen.

Anschließend wird der Hohlraum abgeschlossen, so dass die Kugeln bzw. Ellipsoide nicht mehr herausfallen können. Im einfachsten Falle wird auf die Öffnung des Hohlraums eine Einlegesohle aufgesetzt und diese befestigt. Vorgesehen werden kann allerdings auch eine Folie oder ein Textilmaterial, mit dem die Öffnung des Hohlraums verschlossen wird.

Die den mindestens einen Hohlraum aufweisende Sohle kann somit als Seitenwand einer Zwischensohle fungieren. Möglich ist es aber auch, dass dieser Sohlenkörper als Außensohle genutzt wird.

Die Sohle kann weiterhin mehrere, gegebenenfalls unterschiedliche Hohlräume (Kammern) aufweisen, um gegebenenfalls unterschiedliche Qualitäten von Kugeln bzw. Ellipsoiden aufzunehmen.

Die Kugeln bzw. Ellipsoide, vorzugsweise aus E-TPU, beeinflussen wesentlich die Dämpfung des Schuhs, so dass das Sohlenteil mit den befüllten Hohlräumen bevorzugt als Zwischensohle zum Einsatz kommt.

Die Sohle kann mittels Vernähen oder Verkleben mit dem Schuhoberteil (Schuhschaft) verbunden werden, was als solches bekannt ist.

In der Zeichnung ist ein Ausführungsbeispiel der Erfindung dargestellt. Es zeigen:
- Fig. 1: die Seitenansicht eines Sportschuhs und
- Fig. 2: einen Schnitt durch den Sportschuh in vergrößerter Darstellung gemäß der Einzelheit "X" nach Figur 1.

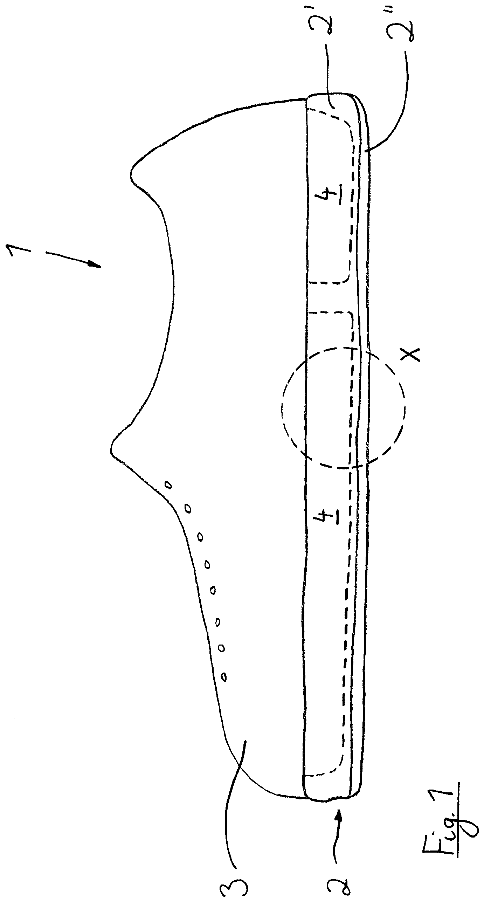

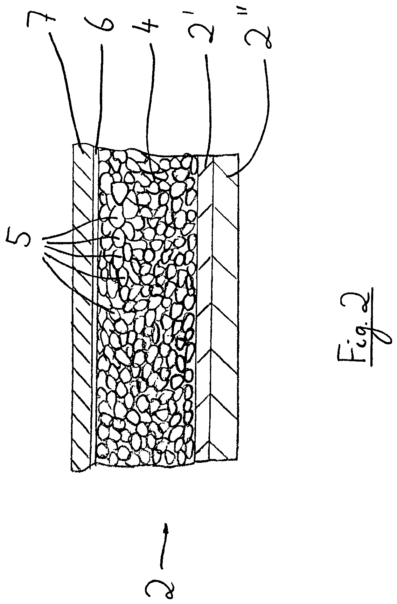

In Figur 1 ist ein Schuh 1 zu sehen, der aus einer Sohle 2 und einem Schuhoberteil 3 besteht. Die Sohle 2 kann mit dem Schuhoberteil 3 durch Nähen und/oder durch Verkleben fest verbunden sein. Die Sohle 2 besteht im Ausführungsbeispiel aus insgesamt drei Komponenten, nämlich aus einer Zwischensohle 2', an deren Unterseite eine Außensohle 2" angeordnet (beispielsweise angeklebt) ist. Aus Figur 2 geht hervor, dass an der Oberseite der Zwischensohle 2' eine Einlegesohle 7 platziert ist.

Wesentlich ist, dass in der Sohle 2 - im Ausführungsbeispiel konkret in der Zwischensohle 2' - Hohlräume 4 angeordnet sind, wie es aus Figur 1 ersichtlich ist. Im Ausführungsbeispiel sind ein größerer Hohlraum 4 im Vorder- und Mittelfußbereich und ein kleinerer Hohlraum 4 im Fersenbereich vorgesehen. Bei den Hohlräumen 4 handelt es sich um Ausnehmungen, die beim Spritzgießen der Zwischensohle 2' hergestellt wurden. Die Hohlräume 4 sind nach unten durch das Material der Zwischensohle 2' begrenzt; am oberen Ende der Zwischensohle 2' sind sie offen.

Besagte Öffnungen werden genutzt, um die Hohlräume 4 mit Kunststoffkörpern 5 zu füllen, wie es aus Figur 2 hervorgeht.

Bei den Kunststoffkörpern 5 handelt es sich um Kugeln bzw. Ellipsoide, die aus expandiertem thermoplastischen Polyurethan (E-TPU) bestehen. Zu diesem Material sind oben bereits Hinweise auf entsprechende Publikationen angegeben.

Wesentlich ist, dass die Kunststoffkörper 5 in den Hohlraum 4 quasi als Schüttgut eingefüllt und im Hohlraum 4 unverbunden miteinander platziert sind. Demgemäß sind die Kunststoffkörper 5 frei von einer Verbindung untereinander. Die Kunststoffkörper 5 stützen sich nach ihrer Befüllung des Hohlraums 4 zwar gegeneinander ab, sind aber lose zueinander angeordnet.

Hierdurch kann nicht nur das Dämpfungsverhalten der Sohle und damit des Schuhs sehr vorteilhaft beeinflusst werden; gleichzeitig ist auch der Herstellungsprozess einfach und kostengünstig durchführbar.

Damit die Kunststoffkörper 5 bei der Benutzung des Schuhs 1 im Hohlraum 4 verbleiben, ist die Oberseite der Zwischensohle 2', d. h. der Zugang zu den Hohlräumen 4, mit einem Verschlusselement 6 verschlossen.

Im Ausführungsbeispiel gemäß Figur 2 ist zu erkennen, dass hierfür eine dünne Kunststofffolie vorgesehen ist, die auf der Oberseite der Zwischensohle 2' aufgeklebt werden kann, um die Kunststoffkörper 5 am Herausfallen aus dem Hohlraum 4 zu hindern. Auf die Kunststofffolie 6 ist im Ausführungsbeispiel dann die Einlegesohle 7 platziert.

Vorgesehen kann allerdings auch werden, dass die Einlegesohle 7 selber als Verschlusselement 6 fungiert, indem sie nämlich nach Befüllung der Hohlräume 4 mit Kunststoffkörpern 5 auf der Oberseite der Zwischensohle 2' befestigt, insbesondere verklebt, wird.

Die Zwischensohle 2' kann in ihrem Seitenbereich transparente Bereiche aufweisen, die von außen die Kunststoffkörper 5 sichtbar werden lassen. Die Kunststoffkörper 5 können auch farblich gestaltet sein, um ein entsprechendes Erscheinungsbild der Sohle bzw. des Schuhs zu erzeugen.

### Bezugszeichenliste:

- 1: Schuh
- 2: Sohle
- 2': Zwischensohle
- 2": Außensohle
- 3: Schuhoberteil
- 4: Hohlraum
- 5: Kunststoffkörper
- 6: Verschlusselement
- 7: Einlegesohle

## Patentansprüche

1. Schuh (1), insbesondere Sportschuh, mit einer Sohle (2) und einem mit der Sohle (2) verbundenen Schuhoberteil (3), wobei in der Sohle (2) mindestens ein Hohlraum (4) ausgebildet ist, wobei der Hohlraum (4) mit einer Anzahl an Kunststoffkörpern (5) gefüllt ist, wobei die Kunststoffkörper (5) ohne Verbindung zueinander im Hohlraum (4) angeordnet sind, und wobei der Hohlraum (4) mit einem Verschlusselement (6) verschlossen ist,
**dadurch gekennzeichnet, dass**
die Kunststoffkörper (5) als Kugeln oder Ellipsoide ausgebildet sind, deren Abmessungen in den drei Raumrichtungen zwischen 1 mm und 13 mm betragen, wobei die Kunststoffkörper (5) aus expandiertem thermoplastischen Polyurethan (E-TPU), aus expandiertem thermoplastischen Elastomer (E-TPE) und/oder aus expandiertem Polypropylen (EPP) bestehen.

2. Schuh nach Anspruch 1, **dadurch gekennzeichnet, dass** die Abmessungen der einzelnen Kunststoffkörper (5) in den drei Raumrichtungen zwischen 3 mm und 9 mm betragen.

3. Schuh nach Anspruch 1 oder 2, **dadurch gekennzeichnet, dass** die Kunststoffkörper (5) den mindestens einen Hohlraum (4) zumindest weitgehend, vorzugsweise vollständig, ausfüllen.

4. Schuh nach einem der Ansprüche 1 bis 3, **dadurch gekennzeichnet, dass** das Verschlusselement (6) durch eine Folie oder ein flächiges Textilmaterial gebildet wird, die oder das mit einem Teil der Sohle (2) verbunden, vorzugsweise verklebt, ist.

5. Schuh nach einem der Ansprüche 1 bis 3, **dadurch gekennzeichnet, dass** das Verschlusselement (6) durch eine Einlegesohle gebildet wird, wobei die Einlegesohle vorzugsweise mit einem Teil der Sohle (2) verbunden, vorzugsweise verklebt, ist.

6. Schuh nach einem der Ansprüche 1 bis 5, **dadurch gekennzeichnet, dass** die Kunststoffkörper (5) aus geschäumtem Kunststoffmaterial bestehen.

7. Schuh nach einem der Ansprüche 1 bis 6, **dadurch gekennzeichnet, dass** die den mindestens einen Hohlraum (4) aufweisende Sohle (2) aus thermoplastischem Polyurethan (TPU), aus thermoplastischem Elastomer (TPE), aus Polyamid (PA) und/oder aus Gummimaterial besteht.

8. Schuh nach einem der Ansprüche 1 bis 7, **dadurch gekennzeichnet, dass** die Sohle mehrere Hohlräume (4) aufweist.

9. Schuh nach Anspruch 8, **dadurch gekennzeichnet, dass** ein erster Hohlraum (4) mit Kunststoffkörpern (5) gefüllt ist, die eine erste Eigenschaft aufweisen, und dass ein zweiter Hohlraum (4) mit Kunststoffkörpern (5) gefüllt ist, die eine zweite Eigenschaft aufweisen, die von der ersten Eigenschaft unterschiedlich ist.

10. Schuh nach Anspruch 9, **dadurch gekennzeichnet, dass** die Eigenschaft das Material der Kunststoffkörper (5), die Größe der Kunststoffkörper (5) und/oder die Härte der Kunststoffkörper (5) ist.

11. Schuh nach einem der Ansprüche 1 bis 10, **dadurch gekennzeichnet, dass** die Sohle (2) eine Zwischensohle (2') umfasst, die den mindestens einen Hohlraum (4) aufweist und die mit einer Außensohle (2") verbunden ist.

12. Schuh nach einem der Ansprüche 1 bis 11, **dadurch gekennzeichnet, dass** die Sohle (2) oder zumindest ein Teil derselben durch einen Spritzgießvorgang hergestellt ist, bei dem der mindestens eine Hohlraum (4) ausgebildet worden ist.

13. Schuh nach einem der Ansprüche 1 bis 12, **dadurch gekennzeichnet, dass** die Kunststoffkörper (5) in voller Packung unter Druck in dem mindestens einen Hohlraum (4) angeordnet sind.

## Claims

1. Shoe (1), in particular sports shoe, having a sole (2) and a shoe upper (3) connected to the sole (2), wherein at least one hollow space (4) is formed in the sole (2), wherein the hollow space (4) is filled with a number plastic bodies (5), wherein the plastic bodies (5) are arranged in the hollow space (4) without any connection to one another, and wherein the hollow space (4) is closed by means of a closure element (6),
**characterized in that**
the plastic bodies (5) are designed as spheres or ellipsoids which dimensions are between 1 mm and 13 mm in the three spatial directions, wherein the plastic bodies (5) consist of expanded thermoplastic polyurethane (E-TPU), of expanded thermoplastic elastomere (E-TPE) and/or of expanded polypropylene (EPP).

2. Shoe according to claim 1, **characterized in that** the dimensions of the single plastic bodies (5) are between 3 mm and 9 mm in the three spatial directions.

3. Shoe according to one of claims 1 or 2, **characterized in that** the plastic bodies (5) fill in at least largely, preferably completely, the at least one hollow space (4).

4. Shoe according to one of claims 1 to 3, **characterized in that** the closure element (6) is formed by a foil or a plane textile material which is connected, preferably glued, with a part of the sole (2).

5. Shoe according to one of claims 1 to 3, **characterized in that** the closure element (6) is formed by an insole, wherein the insole is preferably connected, preferably glued, with a part of the sole (2).

6. Shoe according to one of claims 1 to 5, **characterized in that** the plastic bodies (5) consist of foamed plastic material.

7. Shoe according to one of claims 1 to 6, **characterized in that** the sole (2) which comprises the at least one hollow space (4) consists of thermoplastic polyurethane (TPU), of thermoplastic elastomere (TPE), of polyamide (PA) and/or of rubber material.

8. Shoe according to one of claims 1 to 7, **characterized in that** the sole comprises several hollow spaces (4).

9. Shoe according to claim 8, **characterized in that** a first hollow space (4) is filled with plastic bodies (5) which have a first property and that a second hollow space (4) is filled with plastic bodies (5) which have a second property which is different to the first property.

10. Shoe according to claim 9, **characterized in that** the property is the material of the plastic bodies (5), the size of the plastic bodies (5) and/or the hardness of the plastic bodies (5).

11. Shoe according to one of claims 1 to 10, **characterized in that** the sole (2) comprises a midsole (2') which has the at least one hollow space (4) and which is connected with an outer sole (2").

12. Shoe according to one of claims 1 to 11, **characterized in that** the sole (2) or at least a part of the same is produced by an injection moulding process at which the at least one hollow space (4) is formed.

13. Shoe according to one of claims 1 to 12, **characterized in that** the plastic bodies (5) are arranged in the at least one hollow space (4) in full package under pressure.

## Revendications

1. Chaussure (1), en particulier chaussure de sport, comprenant une semelle (2) et un dessus de chaussure (3) raccordé à la semelle (2), au moins une cavité (4) étant réalisée dans la semelle (2), la cavité (4) étant remplie avec un certain nombre de corps en plastique (5), les corps en plastique (5) étant disposés dans la cavité (4) sans être reliés les uns aux autres, et la cavité (4) étant fermée avec un élément de fermeture (6),
**caractérisée en ce que** :
les corps en plastique (5) sont réalisés sous forme de billes ou d'ellipsoïdes dont les dimensions dans les trois directions spatiales sont comprises entre 1 mm et 13 mm, les corps en plastique (5) étant constitués de polyuréthane thermoplastique expansé (E-TPU), d'élastomère thermoplastique expansé (E-TPE) et/ou de polypropylène expansé (EPP).

2. Chaussure selon la revendication 1, **caractérisée en ce que** les dimensions des corps en plastique individuels (5) dans les trois directions spatiales sont comprises entre 3 mm et 9 mm.

3. Chaussure selon la revendication 1 ou 2, **caractérisée en ce que** les corps en plastique (5) remplissent au moins en grande partie, de préférence complètement, l'au moins une cavité (4) .

4. Chaussure selon l'une quelconque des revendications 1 à 3, **caractérisée en ce que** l'élément de fermeture (6) est formé par un film ou un matériau en textile plat, qui est raccordé, de préférence collé, à une partie de la semelle (2) .

5. Chaussure selon l'une quelconque des revendications 1 à 3, **caractérisée en ce que** l'élément de fermeture (6) est formé par une semelle intérieure, la semelle intérieure étant de préférence raccordée, de préférence collée, à une partie de la semelle (2).

6. Chaussure selon l'une quelconque des revendications 1 à 5, **caractérisée en ce que** les corps en plastique (5) se composent de matière plastique moussée.

7. Chaussure selon l'une quelconque des revendications 1 à 6, **caractérisée en ce que** la semelle (2) présentant l'au moins une cavité (4) se compose de polyuréthane thermoplastique (TPU), d'élastomère thermoplastique (TPE), de polyamide (PA) et/ou de matière caoutchoutée.

8. Chaussure selon l'une quelconque des revendications 1 à 7, **caractérisée en ce que** la semelle présente plusieurs cavités (4).

9. Chaussure selon la revendication 8, **caractérisée en ce qu'**une première cavité (4) est remplie avec des corps en plastique (5) qui présentent une première caractéristique, et **en ce qu'**une deuxième cavité (4) est remplie avec des corps en plastique (5) qui présentent une deuxième caractéristique différente de la première caractéristique.

10. Chaussure selon la revendication 9, **caractérisée en ce que** la caractéristique est le matériau des corps en plastique (5), la taille des corps en plastique (5) et/ou la dureté des corps en plastique (5).

11. Chaussure selon l'une quelconque des revendications 1 à 10, **caractérisée en ce que** la semelle (2) comprend une semelle intermédiaire (2') qui présente l'au moins une cavité (4) et qui est raccordée à une semelle extérieure (2").

12. Chaussure selon l'une quelconque des revendications 1 à 11, **caractérisée en ce que** la semelle (2) ou au moins une partie de celle-ci est fabriquée par un procédé de moulage par injection au cours duquel l'au moins une cavité (4) a été réalisée.

13. Chaussure selon l'une quelconque des revendications 1 à 12, **caractérisée en ce que** les corps en plastique (5) sont disposés dans l'au moins une cavité (4) sous forme de garnissage complet sous pression.
